Europäisches Patentamt

European Patent Office

Office européen des brevets

(19)

(11) Numéro de publication: **0 183 124**

**B1**

(12) **FASCICULE DE BREVET EUROPÉEN**

(45) Date de publication du fascicule du brevet:
28.02.90

(51) Int. Cl. 5: **G 02 B 6/42**

(21) Numéro de dépôt: 85114348.7

(22) Date de dépôt: 12.11.85

(54) Source optique.

(30) Priorité: 13.11.84 FR 8417297

(43) Date de publication de la demande:
04.06.86 Bulletin 86/23

(45) Mention de la délivrance du brevet:
28.02.90 Bulletin 90/09

(84) Etats contractants désignés:
BE DE FR GB IT LU NL SE

(56) Documents cité:
EP-A-0 104 882
DE-A-3 307 669
FR-A-2 311 325
FR-A-2 372 444
FR-A-2 446 497
FR-A-2 488 699
GB-A-2 093 631
JP-A-5 994 725

(73) Titulaire: ALCATEL CIT
33, rue Emeriau
F-75015 Paris (FR)

(72) Inventeur: Jurczyszyn, Michel
68 rue Gabriel Péri
F-94200 Ivry Sur Seine (FR)
Inventeur: Marchand, Michel
23 rue Louise-Aglaée Cretté
F-94400 Ivry Sur Seine (FR)

(74) Mandataire: Weinmiller, Jürgen
Lennéstrasse 9 Postfach 24
D-8133 Feldafing (DE)

LIBERGRAF, STOCKHOLM 1990

## Description

La présente invention est du domaine des télécommunication par voie optique. Elle porte sur une source optique comportant un élément électroluminescent, plus particulièrement une diode laser, couplé à une extrémité de fibre optique, destinée en particulier aux liaisons sous-marines unimodales.

Pour la constitution d'une telle source, il est important de fixer la fibre optique en alignement avec la diode laser, de manière à obtenir un couplage optimal et une variation de couplage aussi réduite que possible dans le temps, au cours de l'utilisation de la source optique.

Le document Wo - A - 79/00099 décrit un procédé de couplage d'une telle diode laser à une fibre optique. Selon ce document, la diode laser est montée sur l'une des branches d'une embase en U, tandis que la fibre optique est supportée par une pièce porte-fibre qui est elle-même fixée dans l'autre branche de l'embase en U. Le réglage de la position de la fibre optique dans la pièce porte-fibre et celui de la pièce porte-fibre dans la branche de l'embase en U, s'effectuent en dynamique, par excitation de la diode laser et mesure de la puissance du signal délivré par la fibre, de manière à repérer le réglage optimal de position de la fibre optique par rapport à la diode laser.

Ces réglages sont effectués tout d'abord par déplacement de la fibre optique dans la pièce porte-fibre alors fixe par rapport à la diode laser, selon une direction Z sensiblement perpendiculaire à la face du laser à coupler à la fibre; après ce premier réglage la fibre est fixée à la pièce porte-fibre. Ils sont ensuite réalisés par déplacement de la pièce porte-fibre par rapport à la diode laser, selon des directions X et Y perpendiculaires à la direction Z précédente. La pièce porte-fibre est alors fixée à l'embase en U.

Les fixations de la fibre optique à sa pièce porte-fibre et de la pièce porte-fibre à l'embase en U sont assurées à l'aide de colle.

Ce mode de fixation à l'aide de colle présente des inconvénients. En particulier, il présente des risques de dégazage et pollution des faces optiques actives et ne procure pas une stabilité à long terme et une fiabilité suffisantes, du fait de la forte tendance au fluage des matières organiques utilisées pour ces fixations. De plus, ce mode de fixation s'avère en pratique difficilement utilisable dans le cas où la fibre est une fibre monomode dont le coeur est de diamètre très faible, de l'ordre de quelques microns.

Le document FR-A-2 472 199 décrit également un procédé de couplage d'une diode laser à une fibre. Selon ce document, les réglages de position de la fibre par rapport à la diode laser se font également en dynamique en trois dimensions, tout d'abord la direction Z, puis les directions X et Y; les fixations de la fibre pour son blocage dans la direction Z puis les directions X et Y font appel à une technique de soudage au laser à gaz. Dans la réalisation donnée, la diode laser est montée sur une embase présentant un socle portant un bloc de soudure, face à la diode laser. Le bloc de soudure est traversé par une ouverture large par rapport au diamètre de la fibre qui y est introduite et peut s'y déplacer. Les zones convenables de la fibre ont préalablement été recouvertes d'une couche de métal, pour faciliter l'adhérence de la soudure sur ces zones. Après les réglages en position de la fibre, effectués en dynamique, on fait fondre au moyen d'un laser à gaz le bloc de soudure qui, en se resolidifiant ensuite, bloque la fibre.

Ce mode de fixation par soudage au laser nécessite un outillage approprié. Cette opération est également très délicate à réaliser, du fait de la proximité des faces actives de la diode laser et de la fibre, de plus ce mode de fixation ne permet pas de s'affranchir totalement d'une légère imprécision du positionnement final de la fibre, due à la dilatation suivie de la contraction du bloc de soudure pendant le processus de scellement de la fibre.

Le document JP-A-5 994 725 publié dans Patent Abstracts of Japan enseigne une méthode de couplage entre un élément électroluminescent monté sur une embase et une extrémité de fibre montée sur une pièce porte-fibre consistant à utiliser une pièce intercalaire préalablement fixée à l'embase et sur laquelle on peut régler en position la pièce porte-fibre avant leur fixation par injection de colle. Les pièces porte-fibre et intercalaire sont à cet effet choisies en Invar; l'une d'elles est aimantée et aimante l'autre, la pièce porte-fibre restant cependant mobile sur la pièce intercalaire pour son réglage en position. Une fois la position précise obtenue ces pièces sont fixées l'une à l'autre par injection de colle.

Le document GB-A-2 093 631 décrit un autre mode de réalisation d'une source optique. Ce document enseigne de souder, à haute température, une diode laser sur un support ce support sur un substrat, avec éventuellement un support intermédiaire, ainsi qu'un support intermédiaire pour une fibre sur ce substrat et d'utiliser une soudure à relativement basse température en tant que support de la fibre alors préalablement métallisée, pour sa fixation sur le support intermédiaire. En outre, il enseigne de choisir ces différents supports en des matériaux et avec des épaisseurs tels que les coefficients de dilation se compensent mutuellement pour le maintien de l'alignement optique, pour des variations de températures incluant celle de fusion de la soudure constituant le support de la fibre. Dans cette réalisation, c'est le choix des matériaux des supports et les épaisseurs de ces supports qui permettent de s'affranchir d'une imprécision du positionnement final de la fibre.

La présente invention porte sur la réalisation d'une source optique dans laquelle les réglages de la position de la fibre par rapport à la diode laser sont également effectués en dynamique en trois dimensions et dans laquelle les fixations relatives de la fibre et de la diode laser tout en faisant appel aux techniques de soudage ne né-

cessitent cependant qu'un outillage très simplifié et permettent d'éviter les inconvénients des modes de fixation précités.

La présente invention a pour objet une source optique comportant un élément électroluminescent monté sur une embase et couplé optiquement à une extrémité de fibre optique montée sur une pièce porte-fibre rendue solidaire de ladite embase par une pièce intercalaire, ayant la forme d'un pavé étroit à faces rectifiées, assemblée préalablement à ladite embase et à laquelle est fixée ladite pièce porte-fibre se présentant également sous la forme d'un simple pavé, caractérisée en ce que ladite pièce intercalaire et ladite pièce porte-fibre débordent toutes deux latéralement d'un côté et de l'autre sur ladite embase et en ce que ladite pièce porte-fibre présente dans ses parties latéralement en saillie sur ladite embase au moins deux trous borgnes, ouverts sur sa face externe dans l'assemblage final, au niveau desquels est assurée la fixation de ladite pièce porte-fibre sur ladite pièce intercalaire par points de soudure par résistance électrique.

Selon une autre particularité de l'invention, ladite fibre est maintenue sur la pièce porte-fibre par une languette ressort et partiellement noyée avec ladite languette ressort dans un bloc de soudure.

Les caractéristiques et avantages de la présente invention ressortiront de la description donnée ci-après d'un exemple de réalisation illustré dans les dessins ci-annexés.

Dans ces dessins:

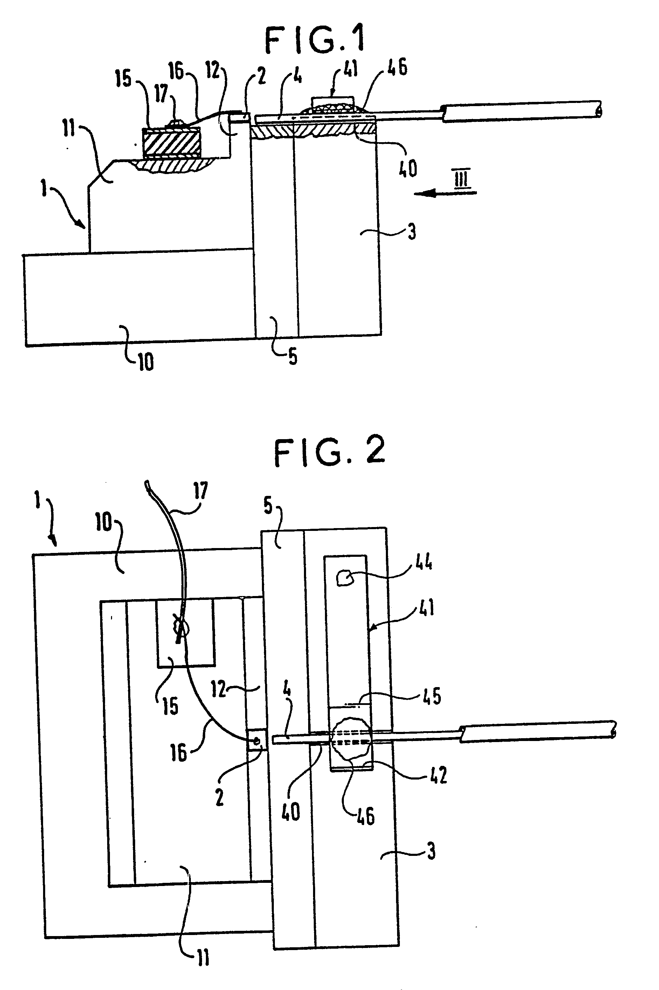

— la figure 1 représente, vue en élévation, la source optique selon l'invention,
— la figure 2 représente cette même source optique vue de dessus,
— la figure 3 est une vue de côté de la source optique, donnée selon la flèche III de la figure 1,
— la figure 4 est une vue en coupe de la source optique, donnée selon la ligne IV - IV de la figure 3.

La source optique illustrée dans les dessins comporte trois sous-ensembles disposés côte-à-côte et assemblés les uns aux autres:

— une embase 1 portant sur sa face supérieure un élément électroluminescent 2, avantageusement une diode laser,
— une pièce porte-fibre 3 se présentant sous la forme d'un petit pavé portant sur l'une de ses petites faces, dite face supérieure, une amorce de fibre optique 4 et
— une pièce auxiliaire 5 se présentant aussi sous la forme d'un petit pavé plus étroit que la pièce porte-fibre, intercalée entre l'embase et la pièce porte-fibre pour leur assemblage et dite pièce intercalaire.

L'embase 1 forme un socle 10 surmonté d'un piédestal parallélépipédique 11 portant la diode laser, le piédestal étant en retrait sur le pourtour du socle, sur trois de ses quatre côtés. La diode laser est montée sur le piédestal de manière à avoir sa face sensible d'émission, couplée à l'amorce de fibre 4, disposée sensiblement dans le plan défini par la face latérale plane de l'embase 1. Pour un meilleur positionnement, la diode laser est montée sur une fine nervure 12 formée entre cette face latérale plane et la face supérieure du piédestal.

L'embase port également un petit bloc isolant 15, par exemple en alumine. Ce bloc 15 est rapporté sur la face supérieure du piédestal 11. Le bloc 15 a ses deux grandes face opposés métallisées, l'une d'elles est fixée par brasure sur la face supérieure du piédestal, ou en variante peut ne pas être métallisée et peut alors être fixée par collage sur la face spérieure du piédestal, et l'autre destinée à permettre les interconnexions électriques avec la diode laser reçoit un fil d'or 16 relié à la diode laser et un fil conducteur extérieur plus épais 17.

L'embase présente, en outre deux trous filetés 13 et 14 pratiqués parallèlement l'un à l'autre sensiblement à mi-hauteur du piédestal 11 et débouchant du côté de la face plane de l'embase et du côté opposé.

L'embase 1 est choisie en un matériau très bon conducteur thermique. Elle est réalisée en cuivre.

La pièce intercalaire 5 forme un petit pavé parallélépipédique étroit. Elle est de hauteur sensiblement égale à celle de l'embase, nervure 12 comprise; elle est accolée par l'une de ses deux grandes faces latérales à la face latérale plane de l'embase en venant déborder de chaque côte du piédestal 11. Cette pièce intercalaire présente, en correspondance avec les trous filetés 13 et 14 dans l'embase, deux trous 53, 54 débouchants sur ses grandes faces latérales.

Sa fixation sur l'embase 1 est assurée par deux vis 6 et 7 dont les tiges 60, 70 sont engagées à travers les trous 53 et 54 de la pièce intercalaire 5 dans les trous filetés 13 et 14 de l'embase, et les têtes 61, 71 sont bloquées à l'extérieur sur les bords des trous 53 et 54. L'ensemble embase 1 - pièce intercalaire 5 forme ainsi une embase composite.

La pièce porte-fibre 3 se présente également sous la forme d'un petit pavé parallélépipédique, sensiblement de même dimensions que la pièce intercalaire en étant toutefois légèrement plus épaisse qu'elle. Elle est fixée sur l'autre grande face latérale de la pièce intercalaire 5 par des points de soudure 31 et 32.

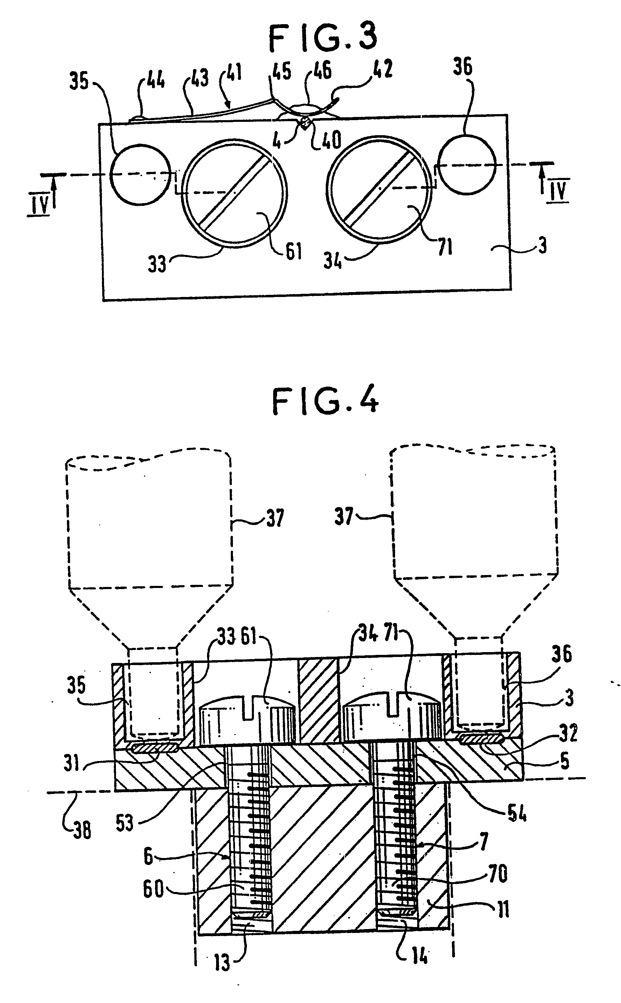

La pièce porte-fibre 3 présente également, en correspondance avec les trous filetés 13 et 14 de l'embase 1 et les trous 53 et 54 de la pièce intercalaire 5, deux trous 33 et 34. Ces trous sont débouchants sur les deux grandes faces de la pièce porte-fibre, ils servent de logement aux têtes 61, 71 des vis 6 et 7 et les rendent accessibles de l'extérieur. De part et d'autre de ces deux trous débouchants 33 et 34, elle présente en outre deux trous borgnes 35 et 36 pratiqués dans les parties qui, avec celles correspondantes de la pièce intercalaire 5, sont en saillie latéralement sur le piédestal 11. Ces trous borgnes sont ouverts sur la grande face latérale de la pièce porte-fibre, extérieure dans l'assemblage final résultant. Ainsi qu'illustré en pointillés dans la figure 4, ils sont destinés à recevoir les pointes terminales d'électrodes mobiles 37 coopérant avec une électrode fixe 38 maintenue en appui, en regard de ces pointes, contre les parties de la pièce intercalaire 5 qui sont en saillie sur le piédestal, pour l'assemblage de ces deux pièces 3 et 5 par soudure par résistance électrique. La profondeur de ces trous borgnes a en outre l'avantage de réduire en épaisseur la pièce porte-fibre au niveau de ces points de soudure.

Cette pièce porte-fibre 3 présente, en outre, sur sa face supérieure dans l'assemblage, une rainure en vé 40, usinée sur toute sa largeur et sensiblement en son milieu. Cette rainure en vé assure un positionnement aisé de l'amorce de fibre 4. Sur cette même face supérieure, elle porte également une languette ressort 41 dont une partie terminale 42 est arquée et forme ressort tandis que l'autre partie 43 sensiblement linéaire assure sa fixation par un point de soudure électrique 44 à son extrémité. La partie arquée 42 a sa surface convexe s'étendant transversalement à la rainure 40 sur laquelle elle est centrée et vient sensiblement en appui sur ses bords. Les parties 42 et 43 de cette languette ressort définissent entre elles une arête vive 45, de pliure, du côté extérieur.

Cette languette ressort 41 forme un moyen de maintien provisoire de l'amorce de fibre 4 pour son réglage en position devant la face sensible de la diode laser 2, avant sa fixation définitive réalisée, au cours d'un réglage en dynamique de position, par un bloc de soudure 46 entre la pièce porte-fibre 3, l'amorce de fibre 4 et la languette ressort 41. L'amorce de fibre 4 reçoit initialement à cet effet une métallisation de surface dans cette zone, où elle est dégainée, sa gaine plastique étant retirée sur une longueur sensiblement supérieure à l'épaisseur de l'ensemble pièce porte-fibre 3 et pièce intercalaire 5 assemblées.

La pièce porte-fibre 3 et la pièce intercalaire 5 assemblées l'une à l'autre par soudage par points par résistance électrique sont toutes deux des pièces usinées soigneusement de manière à présenter une très bonne planéité de surface en particulier en ce qui concerne leurs grandes faces en contact. Elles sont toutes deux choisies en matériau compatible avec ce mode d'assemblage sans imposer de puissance électrique importante, mais également en outre, en matériau aisément usinable et présentant un coefficient de dilatation voisin de celui du matériau de l'embase 1.

Pour une embase en cuivre, ces deux pièces sont en un alliage inoxydable de nickel-cuivre-zinc, tel que celui connu sous la dénomination commerciale Arcap.

Ce mode d'assemblage est rapide et aisé. Il ne provoque qu'un échauffement minimal des surfaces extérieures des pièces à souder donc très faiblement transmis à l'embase 1. De plus, le volume de métal chauffé, pour cette soudure sans apport extérieur, est réduit au minimum; il intervient sans déformation ni tension internes.

La réalisation de la tête optique s'effectue selon les étapes successives suivantes:

- une étape préliminaire de préparation et de contrôle des sous-ensembles aboutissant d'une part à l'assemblage de la pièce intercalaire 5 sur l'embase 1 portant la diode laser 2 et d'autre part à la pièce porte-fibre 3 portant l'amorce de fibre 4 métallisée qui est simplement maintenue dans la rainure en vé par la languette ressort;

- une première étape de réglage en dynamique de l'amorce de fibre devant la diode laser réalisée à l'aide d'un micromanipulateur de l'amorce de fibre, affecté au réglage axial de l'amorce de fibre, selon la direction Z précitée, aboutissant au brasage de l'amorce de fibre sur la pièce porte-fibre maintenue devant l'embase et la pièce intercalaire assemblées;

- une seconde étape de réglage en dynamique de l'amorce de fibre fixée à la pièce porte-fibre, réalisée à l'aide d'un micromanipulateur de l'ensemble embase-pièce intercalaire, affecté au réglage selon les directions X, Y précitées de l'amorce de fibre, aboutissant à l'insertion à pression des électrodes mobiles dans les trous borgnes de la pièce porte-fibre et au soudage de cette pièce porte-fibre sur la pièce intercalaire;

- une étape finale de contrôle de la qualité du couplage entre la diode laser et l'amorce de fibre dans la source optique réalisée.

Ce mode de réalisation de la tête optique selon l'invention présente de nombreux avantages. Outre ceux découlant de la soudure par points par résistance électrique effectuée sur la pièce intercalaire et non directement sur l'embase 1, à l'aide d'un outillage simple, il est possible après l'opération de soudage de la pièce porte-fibre sur la pièce intercalaire de rattraper un éventuel léger déréglage d'alignement introduit à l'insertion à pression des électrodes mobiles dans la pièce porte-fibre et détecté lors de l'étape finale de contrôle de la qualité de couplage obtenu. Ce rattrapage est réalisé à l'aide des vis de fixation de la pièce intercalaire sur l'embase 1, dont les têtes sont accessibles à travers la pièce porte-fibre, et dont les tiges traversent la pièce intercalaire en présentant un petit jeu possible dans les trous de passage de cette pièce intercalaire.

Ce mode de fixation indirect de la pièce porte-fibre sur l'embase permet aussi, dans l'éventualité d'un déréglage excessif, de récupérer le sous ensemble embase-diode laser n'ayant subi aucune altération, notamment de surface, au cours du montage de la source optique concernée qui est alors dite défaillante, pour sa réutilisation dans une nouvelle source optique.

La présente invention a été décrite en regard d'un exemple de réalisation illustré dans les dessins ci-annexés. Il est évident que l'on peut y apporter des modifications de détail et/ou remplacer certains moyens par d'autres moyens techniquement équivalents.

**Revendications**

1. Source optique comportant un élément électroluminescent monté sur une embase (1) et couplé optiquement à une extrémité de fibre optique montée sur une pièce porte-fibre (3) rendue solidaire de ladite embase par une pièce intercalaire (5), ayant la forme d'un pavé étroit à faces rectifiées, assemblée préalablement à ladite embase (1) et à laquelle est fixée ladite pièce porte-fibre (3) se présentant également sous la forme d'un simple pavé, caractérisée en ce que ladite pièce intercalaire (5) et ladite pièce porte fibre (3) débordent toutes deux latéralement d'un côté et de l'autre sur ladite embase (1) et en ce que ladite pièce porte-fibre (3) présente dans ses parties latéralement en saillie sur ladite embase (1) au moins deux trous borgnes (35, 36), ouverts sur sa face externe dans l'assemblage final, au niveau desquels est assurée la fixation de ladite pièce porte-fibre (3) sur ladite pièce intercalaire par points de soudure par résistance électrique.

2. Source optique selon la revendication 1, caractérisée en ce que ladite pièce intercalaire (5) présente deux trous lisses débouchants (53, 54) et ladite embase (1) deux trous filetés correspondants (13, 14) pour leur fixation l'une à l'autre par vis (6, 7).

3. Source optique selon la revendication 2, caractérisée en ce que ladite pièce porte-fibre (3) présente deux trous débouchants (33, 34) pratiqués dans son épaisseur en correspondance avec les trous (53, 54; 13, 14) de la pièce intercalaire (5) et de ladite embase (1), pour le logement des têtes (61, 71) desdites vis (6, 7) et leur accessibilité de l'extérieur.

4. Source optique selon l'une des revendications 1 à 3, caractérisée en ce que ledit élément électroluminescent (2) est monté sur une nervure (12) formée dans le prolongement de sa face latérale d'appui avec ladite pièce intercalaire (5).

5. Source optique selon l'une des revendications 1 à 4, caractérisée en ce que ladite pièce porte-fibre (3) porte sur l'une de ses petites faces, dite face supérieure dans l'assemblage, une languette ressort (41) de maintien provisoire de ladite fibre (4) avec laquelle elle est au moins partiellement fixée par un bloc de soudure (46) sur la face supérieure de la pièce porte-fibre, au cours d'un réglage axial en dynamique de ladite fibre optique (4) sur ledit élément électroluminescent (2).

6. Source optique selon la revendication 5, caractérisée en ce que ladite pièce porte-fibre (3) présente, sur sa face supérieure, une rainure en vé (40) de positionnement de ladite fibre (4) sur laquelle s'étend transversalement une partie arquée (42) de ladite languette (41) dont la surface convexe est centrée sur ladite rainure et est sensiblement en appui sur ses bords.

7. Source optique selon l'une des revendications 1 à 6, caractérisée en ce que ladite embase (1) est en matériau conducteur thermique et lesdites pièces intercalaire (5) et porte-fibre (3) en matériau usinable et soudable par résistance électrique et présentant des caractéristiques de dilatation voisines de celles du matériau de l'embase.

8. Source optique selon la revendication 7, caractérisée en ce que ladite embase (1) est en cuivre et lesdites pièces intercalaire (5) et porte-fibre (3) en un alliage inoxydable nickel-cuivre-zinc.

**Patentansprüche**

1. Optische Quelle mit einem Elektrolumineszenzelement, das auf einer Grundplatte (1) montiert und optisch mit einem Ende einer optischen Faser gekoppelt ist, welche auf einem Faserträger (3) befestigt ist, der seinerseits mit der Grundplatte durch ein Zwischenbauteil (5) fest verbunden ist, das die Gestalt einer schmalen Platte mit maßgeschliffenen Flächen besitzt, zuvor mit der Grundplatte (1) zusammengebaut wird, und mit der der Faserträger (3) verbunden ist, welcher ebenfalls die Gestalt einer einfachen Platte aufweist, dadurch gekennzeichnet, daß das Zwischenbauteil (5) und der Faserträger (3) an beiden Seiten über die Grundplatte (1) überstehen und daß der Faserträger (3) in seinen über die Grundplatte vorstehenden Seitenpartien mindestens zwei Blindlöcher (35, 36) aufweist, die zur Augenseite des fertigen Aufbaus offen sind und über die die Befestigung des Faserträgers (3) am Zwischenbauteil mit Lötpunkten durch elektrisches Widerstandsschweißen erfolgt.

2. Optische Quelle nach Anspruch 1, dadurch gekennzeichnet, daß das Zwischenbauteil (5) zwei glatte durchgehende Löcher (53, 54) und die Grundplatte (1) zwei entsprechende Gewindelöcher (13, 14) zu deren gegenseitigen Befestigung durch Schrauben aufweist.

3. Optische Quelle nach Anspruch 2, dadurch gekennzeichnet, daß der Faserträger (3) zwei durchgehende Löcher (33, 34) aufweist, die in Flucht mit den Löchern (53, 54; 13, 14) des Zwischenbauteils (5) und der Grundplatte verlaufen und zur Aufnahme der Köpfe (61, 71) der Schrauben (6, 7) und deren Zugänglichkeit von außen dienen.

4. Optische Quelle nach einem der Ansprüche 1 bis 3, dadurch gekennzeichnet, daß das elektrolumineszierende Element (2) auf einer Rippe (12) montiert ist, die als Verlängerung der seitlichen Anschlagfläche mit dem Zwischenbauteil (5) ausgebildet ist.

5. Optische Quelle nach einem der Ansprüche 1 bis 4, dadurch gekennzeichnet, daß der Faserträger (3) auf einer seiner kleinen Seiten, genannt obere Aufbaufläche, eine Zungenfeder (41) zur vorübergehenden Halterung der Faser (4) trägt, mit deren Hilfe die Fasern während der dynamischen axialen Justierung der optischen Faser (4) auf das elektrolumineszierende Element (2) mindestens teilweise durch einen Schweißpunkt (46) auf der oberen Fläche des Faserträgers fixiert wird.

6. Optische Quelle nach Anspruch 5, dadurch gekennzeichnet, daß der Faserträger (3) in seiner oberen Fläche eine V-förmige Nut (40) zur Positionierung der Faser (4) aufweist, über die sich quer dazu ein gewölbter Abschnitt (42) der Zungenfeder (41) erstreckt, dessen konvexe Oberfläche auf die Nut zentriert ist und im wesentlichen auf ihren Rändern aufliegt.

7. Optische Quelle nach einem der Ansprüche 1 bis 6, dadurch gekennzeichnet, daß die Grundplatte (1) aus wärmeleitendem Material und das Zwischenbauteil (5) sowie der Faserträger (3) aus einem Material bestehen, das bearbeitbar und durch elektrisches Widerstandslöten schweißbar ist, wobei sie Ausdehnungseigenschaften besitzen, die nahe bei denen des Materials der Grundplatte liegen.

8. Optische Quelle nach Anspruch 7, dadurch gekennzeichnet, daß die Grundplatte (1) aus Kupfer und das Zwischenbauteil (5) sowie der Faserträger (3) aus einer rostfreien Nickel-Kupfer-Zink-Legierung bestehen.

**Claims**

1. An optical source comprising an electro-luminescent element, which is mounted on a base (1) and optically coupled to an optical fiber end, that is mounted in turn on a fiber-carrier (3) and secured to said base by means of an intermediary part (5) which has the shape of a narrow slab provided with rectified faces, which is assembled in advance on said base (1) and to which is fixed said fiber-carrier (3), the latter also having the shape of a simple slab, characterized in that said intermediary part (5) and said fiber-carrier (3) both project laterally on either side from said base (1), and that said fiber-carrier (3) is provided in its portions projecting laterally from said base (1) with at least two blind holes (35, 36), which are open to the outer face of the fiber-carrier (3) in the final assembly and which serve for fixing said fiber-carrier (3) to said intermediary part by means of soldering spots applied by way of electrical resistance welding.

2. An optical source according to claim 1, characterized in that said intermediary part (5) has two smooth through holes (53, 54) and said base (1) has two corresponding threaded holes (13, 14) for interconnecting said components by means of screws (6, 7).

3. An optical source according to claim 2, characterized in that said fiber-carrier (3) has two through holes (33, 34) in its thickness corresponding to said holes (53, 54; 13, 14) in said intermediary part (5) and said base (1) and adapted to accommodate the heads (61, 71) of said screws (6, 7) and to ensure their accessibility from outside the device.

4. An optical source according to one of claims 1 through 3, characterized in that said electro-luminescent component (2) is mounted on a rib (12) formed on an extension of its side surface bearing on said intermediary part (5).

5. An optical source according to any one of claims 1 through 4, characterized in that said fiber-carrier (3) carries on one of its smaller sides, referred to as the top surface in the assembly, a resilient blade (41) for temporarily securing said fiber (4), to which it is at least partially fixed by a mass of solder (46) on the top surface of said fiber-carrier (4) relative to said electro-luminescent component (2).

6. An optical source according to claim 5, characterized in that said fiber-carrier (3) has on its top surface a V-shaped groove (40) for positioning said fiber (4), over which extends in a transverse direction an arcuate part (42) of said blade (41) whose convex surface is centered on said groove and is in substantial bearing engagement with its edges.

7. An optical source according to any one of claims 1 through 6, characterized in that said base (1) is of a thermally conductive material and said intermediary part (5) and said fiber-carrier (3) are of a material that can be machined and electrical resistance soldered, having thermal expansion properties comparable with those of the material of said base.

8. An optical source according to claim 7, characterized in that said base (1) is of copper and said intermediary part (5) and said fiber-carrier (3) are of a stain-resistant alloy of nickel, copper and zinc.

# FIG.1

# FIG. 2

# FIG.3

# FIG.4